Europäisches Patentamt

European Patent Office

Office européen des brevets

(11) Publication number: **0 318 615**
**A1**

# EUROPEAN PATENT APPLICATION

(21) Application number: 87310620.7

(22) Date of filing: 02.12.87

(51) Int. Cl.4: **C08L 21/00 , C08L 33/14 , //(C08L21/00,33:14), (C08L33/14,21:00)**

(43) Date of publication of application:
**07.06.89 Bulletin 89/23**

(84) Designated Contracting States:
**CH DE FR GB LI NL**

(71) Applicant: **C.I. KASEI CO., LTD**
**18-1 Kyobashi 1-chome**
**Chuo-ku Tokyo-to(JP)**

(72) Inventor: **Terauchi, Michiyoshi**
**246-14, Koizumi**
**Ageo-shi, Saitama-ken(JP)**
Inventor: **Takasaki, Kazuhiro**
**1-22-104,Nishi-ageo Daiichi-danchi,845-1**
**Oaza Koshikiya, Ageo-shi, Saitama-ken(JP)**

(74) Representative: **Allard, Susan Joyce et al**
**BOULT, WADE & TENNANT 27 Furnival Street**
**London EC4A 1PQ(GB)**

(54) A water-swellable composition for water-leakage prevention.

(57) A water-swellable composition for water-leakage prevention useful in construction works is a compounded material comprising (A) 100 parts by weight of an elastomer such as polychloroprene rubber and (B) 20 to 300 parts by weight of a highly water-absorptive resin which is a crosslinked material of a copolymer of a ternary monomeric mixture composed of (meth)acrylic acid, an ester of (meth)acrylic acid having a sulfonic acid group, for example a compound of the formula
$CH_2 = CR-CO-O(CH_2)_n - SO_3X$,
R being H or methyl, X being H or a monovalent cation and n being an integer of at least 2, such as sodium 2-sulfoethyl acrylate, and (meth)acrylamide in a specified proportion. The crosslinks are formed either by reacting the copolymer with a crosslinking agent such as propylene glycol or by copolymerizing the monomers in the presence of a copolymerizable crosslinking agent such as N,N-methylene bisacrylamide. The composition is capable of exhibiting stable swelling pressure and strength even in water containing polyvalent metal ions, e.g., calcium ions.

EP 0 318 615 A1

## A WATER-SWELLABLE COMPOSITION FOR WATER-LEAKAGE PREVENTION

The present invention relates to a novel water-swellable composition useful for water-leakage prevention. More particularly, the present invention relates to a water-swellable composition for water-leakage prevention capable of exhibiting excellent sealing effect with stable water absorption even in an aqueous solution containing polyvalent metal ions such as sea water and so-called hard water.

A veriety of water-leakage preventing materials are widely used in the works of civil engineering and building construction with an object to prevent leakage of water by filling fissures, cracks, interstices and the like in joints of mortar or concrete or junctions of water pipes from which water may leak otherwise.

Such water-leakage preventing materials have been prepared most conventionally by using a readily deformable water-resistant substance, such as rubbers, plastics, bitumens and the like, as the base material. These conventional base materials, however, are defective in respect of the durability or adaptability to the change in the dimension of the interstice and lose the water-leakage preventing effect because the elastic resilience of the material is decreased or a phenomenon of creep appears in the material in the long-run use.

As a remedy of the above described defects of the conventional water-leakage preventing materials, a water-swellable polymeric composition is proposed for the purpose in Japanese Patent Kokai 57-135160 and 57-108143, which is capable of being swollen or expanded when brought into contact with water. Such a water-swellable polymeric composition is usually composed of a highly water-absorptive resin obtained by crosslinking a water-soluble polymer or a vulcanized composite of a composition composed of such a water-swellable resin and a non-swellable substance such as a diene-based rubber, vulcanizing agent, vulcanizing accelerator, filler, aging retarder and the like.

Alternatively, Japanese Patent Kokai 55-3424 discloses a water-swellable composition which is a blend of a highly water-absorptive resin with a plastic resin having pliability such as copolymers of ethylene and vinyl acetate.

A water-leakage preventing material formed of such a water-swellable composition expands when it is brought into contact with water to exhibit a large swelling pressure to fill up the interstice from which water leakage occurs so that the water leakage can be prevented very efficiently. Therefore, the water-leakage preventing material of the type of a water-swellable composition is very desirable in respect of the high water-leakage preventing effect despite the simple and easy way of the application thereof to the interstices.

In consideration of the water absorptivity and durability of the water-leakage preventing material compounded with a highly water-absorptive resin, the highly water-absorptive resin is usually prepared by forming crosslinks in a polymer containing or formed from $\alpha,\beta$ -unsaturated compound having one or two carboxyl groups or groups convertible thereto in a molecule as the monomeric constituent. For example, preferable highly water-absorptive resins include crosslinked materials of polyacrylic acid in the form of a salt, crosslinked materials of a copolymer of isobutylene and maleic anhydride in the form of a salt, crosslinked materials of a copolymer of polyvinyl alcohol and acrylic acid in the form of a salt and the like.

Water-leakage preventing materials containing the above mentioned highly water-absorptive resin having carboxyl groups, however, have disadvantages in that their capacity of water absorption is gradually decreased and causes loss of the water-leakage preventing power when the material is brought into contact with an aqueous solution containing polyvalent metal ions such as sea water and hard water due to the formation of metal-bonded crosslinks between the carboxyl groups with the polyvalent metal ions.

Recently, a water-swellable polymeric material capable of being expanded even in saline water to overcome the above mentioned problems has been proposed in Japanese Patent Kokai 61-31450 and 61-36309, of which the principal constituent is a crosslinked polymer or copolymer of sulfoalkyl (meth)acrylates. Although this material indeed has a considerably improved swellability in saline water in respect of the volume expansion, the relative swellability is not quite satisfactory in water containing no salty ingredients such as city water.

The present invention accordingly has an object to provide a water-swellable composition for water-leakage prevention capable of exhibiting excellent water-leakage preventing power with stability of the capacity of water absorption even in an aqueous solution containing polyvalent metal ions by reducing or obviating the above described problems in the conventional water-leakage preventing materials containing a highly water-absorptive resin having carboxyl groups.

Thus, the water-swellable composition for water-leakage prevention provided by the present invention comprises, in a uniform blend:

(A) 100 parts by weight of an elastomer; and

2

(B) from 20 to 300 parts by weight of a highly water-absorptive resin which is a crosslinked material of a copolymer of a monomer mixture composed of

(a) from 40 to 90% by moles of a combination of (a-1) at least one unsaturated carboxylic acid selected from the group consisting of acrylic acid and methacrylic acid in the form of the free acid or in the form of a salt and (a-2) at least one unsaturated ester compound selected from the group consisting of esters of acrylic or methacrylic acid having a sulfonic acid group in the form of the free acid or in the form of a salt in a molar ratio (a-1):(a-2) in the range from 2:8 to 4:6, and

(b) from 60 to 10% by moles of at least one unsaturated amide compound selected from the group consisting of acrylamide and methacrylamide.

The inventors have previously proposed a highly water-absorptive resin having excellent resistance against salts and alkalis which is a crosslinked material of a hydrophilic polymer having carboxyl and/or hydroxy groups as well as sulfonic acid groups in the form of the free acid or a salt introduced thereinto (see Japanese Patent Kokai 57-42765).

The inventors have further continued their investigations with an object to improve the properties of the above disclosed highly water-absorptive resin and, as a result, have arrived at an unexpected discovery that the above mentioned object of the invention can be achieved by compounding an elastomer with a specified amount of a highly water-absorptive resin which is a crosslinked material of a copolymer of a monomeric mixture composed of a specific combination of (meth)acrylic acid in the form of acid or salt, (meth)acrylic monomers having sulfonic acid groups in the acid form or salt form and (meth)acrylamide by virtue of the stability in the capacity of water absorption even in an aqueous solution containing polyvalent metal ions leading to completion of the present invention on the base of this discovery.

The elastomer as the component (A) of the inventive composition, which is compounded with the specific water-absorptive resin as the component (B), may be any of natural rubber, synthetic rubbers and synthetic resins having pliability. Exemplary of suitable synthetic rubbers are polyisoprene rubbers, polybutadiene rubbers, random-copolymeric rubbers of styrene and a diene monomer, copolymeric rubbers of acrylonitrile and a diene monomer, copolymeric rubbers of isobutylene and isoprene, copolymeric rubbers of ethylene, propylene and a diene monomer and other diene-based rubbers. Exemplary of the synthetic resins having pliability are chlorinated polyethylenes, chlorosulfonated polyethylenes, copolymers of ethylene and vinyl acetate, plasticized polyvinyl chloride resins, polyurethanes and the like. These elastomeric polymers can be used either singly or as a combination of two kinds or more according to need.

The highly water-absorptive resin as the component (B) in the inventive composition to be dispersed in the above described component (A) is a crosslinked material of a copolymer obtained by the copolymerization of a ternary monomeric mixture composed of (a-1) acrylic acid and/or methacrylic acid in the form of the free acid or a salt, (a-2) an ester of (meth)acrylic acid having a sulfonic acid group in the form of the free acid or a salt and (b) (meth)acrylamide. The crosslinking reaction of the copolymer can be performed by blending the copolymer with a crosslinking agent and heating the blend. Alternatively, a crosslinked copolymer can be obtained by conducting the copolymerization reaction with addition of a polyfunctional monomer as a crosslinking agent to the monomeric mixture.

The monomeric constituent (a-1) in the monomer mixture is acrylic acid and/or methacrylic acid which may be in the form of the free acid or in the form of a salt. When the salt-form monomer is used, the cations forming the salt should preferably be ions of an alkali metal such as sodium and potassium. These monomeric compounds can be used either singly or as a combination of two kinds or more according to need.

The monomeric constituent (a-2), which is an ester of acrylic or methacrylic acid having a sulfonic acid group in the free acid form or a salt form is a compound represented by the general formula

$$CH_2 = CR-CO-O\{CH_2\}_n-SO_2X, \quad (I)$$

in which R is a hydrogen atom or a methyl group, X is a hydrogen atom or a monovalent cation and n is an integer of 2 or larger. Exemplary of the compound in conformity with the formula (I) and definition of the symbols are sulfoethyl acrylate, sulfopropyl acrylate, sulfobutyl acrylate, sulfoethyl methacrylate, sulfopropyl methacrylate, sulfobutyl methacrylate and the like as well as alkali metal salts and ammonium salts thereof. These monomeric compounds can be used also either singly or as a combination of two kinds or more according to need.

In the monomeric mixture for the preparation of the highly water-absorptive resin as the component (B) in the inventive composition, acrylic acid and/or methacrylic acid as the monomer constituent (a-1) and the above described sulfoalkyl (meth)acrylate as the monomeric constituent (a-2) represented by the general formula (1) should be combined in a molar ratio in the range from 2:8 to 4:6. When the proportion of the latter constituent, i.e. (a-2), is too small, the swelling ratio of the water-swellable composition may be decreased in an aqueous solution containing polyvalent metal ions. When the proportion thereof is too large, on the other hand, the crosslinking density of the copolymer cannot be high enough by the crosslinking treatment so that the crosslinked resin may have somewhat poor mechanical strengths.

In addition to the above mentioned monomeric constituents (a-1) and (a-2), the monomeric mixture for the preparation of the copolymer should further contain acrylamide and/or methacrylamide as the monomeric constituent (b). The combined use of this monomeric constituent is essential in order that the highly water-absorptive resin may exhibit stability in the capacity of water absorption even in an aqueous solution containing polyvalent metal ions and the ratio of the degrees of swelling in pure water and in aqueous salt solutions, referred to as the swelling retention hereinbelow, can be further increased along with stabilization of the mechanical strengths.

The monomeric constituent (b), i.e. acrylamide and/or methacrylamide, is added to the monomeric mixture in such an amount that the monomeric mixture is composed of from 40 to 90% by moles of the total amount of the monomeric constituents (a-1) and (a-2) and from 60 to 10% by moles of the monomeric constituent (b). When the amount of the monomeric constituent (b) is too small, the desired stabilization of the highly water-absorptive resin cannot be achieved to a full extent. When the amount thereof is too large, on the other hand, the water-swellability of the highly water-absorptive resin and, consequently, the inventive water-swellable composition is decreased so that no sufficiently high water-leakage preventing effect can be obtained.

The highly water-absorptive resin as the component (B) of the inventive water-swellable composition can be prepared by the copolymerization of a monomeric mixture composed of the above described monomeric constituents (a-1), (a-2) and (b) in a specified proportion with heating in the presence of a polymerization initiator followed by crosslink formation in the thus prepared copolymer. Suitable polymerization initiator is exemplified by persulfates such as sodium persulfate and organic peroxides such as benzoyl peroxide.

The crosslinking reaction is performed by admixing the above described copolymer with a small amount of a cross-linking agent and, optionally, heating the mixture at an elevated temperature. Suitable crosslinking agents include polyfunctional compounds having, in a molecule, two or more of functional groups capable of reacting with a carboxyl group to form a chemical linkage, e.g., hydroxy group, epoxy group, amino group and the like, such as ethylene glycol, propylene glycol, glycerin, glycidyl alcohol, diglycidyl ether, glycerin triglycidyl ether, ethylene glycol diglycidyl ether, ethanolamine, ethylene diamine, propylene diamine, polyethylene glycol, trimethylol melamine, pentaerithritol, trimethylol propane, polyethylene imine, urea and the like. The crosslinking reaction of the copolymer may be performed optionally in an organic solvent.

When a polyvalent epoxy compound or a polyvalent amine compound is used as the crosslinking agent, a convenient and advantageous way for performing the crosslinking reaction is that the crosslinking agent is added directly to a mixture of the copolymer and an aqueous solution of an alkali metal compound or alkaline earth metal compound or ammonia to effect the reaction followed by separation of the reaction product which is then dried and subjected to a heat treatment. The crosslinking density in the crosslinked copolymer can be controlled by using an appropriately controlled amount of the crosslinking agent so that the resultant highly water-absorptive resin may have a desired capacity of water absorption.

Alternatively, the crosslinked highly water-absorptive resin as the component (A) in the inventive composition can be prepared by performing the copolymerization reaction of the monomeric mixture of the monomers (a-1), (a-2) and (b) in the presence of a polyfunctional ethylenically unsaturated compound as a crosslinking agent so that an appropriate number of crosslinks can be introduced into the copolymer as it is formed by the copolymerization reaction. Examples of such a copolymerizable crosslinking agent having two or more of ethylenically unsaturated groups in a molecule are polyfunctional unsaturated amide compounds such as N,N-methylene bis(meth)acrylamide, N,N-ethylene bis(meth)acrylamide, N,N-propylene bis(meth)acrylamide and the like and polyfunctional unsaturated esters such as ethylene glycol di(meth)acrylate, diethylene glycol di(meth)acrylate, triethylene glycol di(meth)acrylate, propylene glycol di(meth)acrylate, polyethylene glycol di(meth)acrylate, trimethylol propane tri(meth)acrylate, pentaerithritol tri(meth)acrylate, pentaerithritol di(meth)acrylate and the like.

In carrying out the copolymerization reaction in the presence of the above described copolymerizable crosslinking agent, the amount of the copolymerizable crosslinking agent in the monomeric mixture should be controlled in order to obtain an appropriate crosslinking density in the copolymer. It is usually preferable that the amount of the copolymerizable crosslinking agent is in the range from 0.01 to 5% by weight or, more preferably, from 0.05 to 2% by weight based on the total amount of the monomers (a-1), (a-2) and (b).

4

When the highly water-absorptive resin as the component (B) of the inventive composition has a small capacity of water absorption, the water-swellable composition for water-leakage prevention compounded therewith may exhibit only an insufficient degree of maximum swelling in water while, when the capacity of water absorption of the highly water-absorptive resin is too large, the water-leakage preventing material may have unduly low mechanical strengths after swelling in water so that, at any rate, no satisfactorily high swelling pressure can be exhibited by the water-swollen material. In this regard, it is preferable that the capacity of water absorption of the highly water-absorptive resin should be controlled in the range from 10 times to 500 times or, more preferably, from 20 times to 300 times of water absorption in pure water relative to the dry weight of the water-swellable composition.

The water-swellable composition of the present invention is prepared by compounding the above described highly water-absorptive resin as the component (B) and an elastomer as the component (A) in such a proportion of 20 to 300 parts by weight or, preferably, 50 to 200 parts by weight of the highly water-absorptive resin per 100 parts by weight of the elastomer. When the amount of the highly water-absorptive resin is too small, the water-swellability of the composition may be unduly low so that no satisfactory water-leakage preventing effect can be exhibited by the composition. When the amount thereof is too large, on the other hand, the mechanical strength of the water-swellable composition for water-leakage prevention is decreased so badly after swelling with water that the composition can no longer be suitable for practical use.

Following is a description of a preferable procedure for the preparation of the inventive water-swellable composition for water-leakage prevention. When the elastomer as the component (A) is a pliable synthetic resin such as a chlorinated polyethylene, the elastomeric resin and the highly water-absorptive resin are taken each in a calculated and weighed amount and thoroughly blended together with addition of various kinds of optional additives such as antioxidants, ultraviolet absorbers, reinforcing agents, inorganic fillers, softeners, plasticizers, coloring agents and the like and the compound is shaped by extrusion molding or compression molding into the desired water-leakage preventing material.

When a diene-based rubber is used as the elastomer, the rubber and the highly water-absorptive resin are taken each in a calculated and weighed amount and thoroughly blended together with addition of the above named various additives and other additives conventionally used in diene-based rubbers including vulcanizing agents, vulcanization accelerators, vulcanization aids and the like and the compound is shaped and vulcanized with heating onto the desired water-leakage preventing material.

As is described above, the water-swellable composition of the present invention is compounded with a very specific highly water-absorptive resin which is a crosslinked material of an acrylic copolymer having a specific amount of sulfonic acid groups in the free acid form or a salt form. The inventive composition can exhibit a capacity of water absorption with stability even in an aqueous solution containing polyvalent metal ions, such as sea water and hard water, so that the composition is used for preventing leakage of water containing polyvalent metal ions. For example, the inventive composition can be used in the construction works of civil engineering and buildings as a filling material of coupling surfaces of shield segments, joints of concrete pipes and pre-fabricated culvert boxes, construction joints of concrete and the like.

Following are the examples to illustrate the inventive water-swellable composition for water-leakage prevention in more detail but not to limit the scope of the invention in any sense. In the following examples, the swelling ratio of the water-leakage preventing materials and the swelling retention thereof were determined in the following manner.

Thus, test pieces each having dimensions of 2 cm by 2 cm wide and 3 mm thick were taken from the water-leakage preventing material by cutting and, after accurately determining the weight, the test pieces were immersed for 30 days at room temperature either in city water or in an aqueous solution containing 2.5% by weight of calcium hydroxide to be swollen therein. The thus swollen test pieces were subjected to the measurement of the respective weights from which the swelling ratio was calculated by the equation:

Swelling ratio, times = (weight of dry test piece)/(weight of swollen test piece);

and the swelling retention was calculated by the equation:

Swelling retention, % = (swelling ratio in aqueous solution of calcium hydroxide)/(swelling ratio in city water) x 100.

In the following examples, the term of "parts" always refers to "parts by weight".

Example 1.

A monomer mixture composed of 18.5% by moles of sodium methacrylate, 38% by moles of sodium 2-sulfoethyl methacrylate and 43.5% by moles of methacrylamide was admixed with 1% by weight of ammonium persulfate as a polymerization initiator and heated at 70 °C for 2 hours to effect copolymerization of the monomers. The molar ratio of the sodium methacrylate to the sodium 2-sulfoethyl methacrylate was 3.3:6.7. The thus obtained copolymer was blended with 0.1% by weight of propylene glycol together with a small amount of an acid catalyst and the blend was heated at 130 °C for 5 hours to have the copolymer crosslinked.

A polymeric composition was prepared by uniformly kneading, on a 10-inch test roller mill, a mixture composed of 100 parts of the above obtained highly water-absorptive resin, 50 parts of a chlorinated polyethylene and 80 parts of a polychloroprene rubber together with 3 parts of magnesium oxide, 4 parts of zinc oxide, 1 part of 2-mercapto imidazoline as a vulcanization accelerator, 2 parts of di-tert-butyl p-cresol, 20 parts of a process oil as a softener and 2 parts of 2,2-methylene bis-4-methyl-6-tert-butyl phenol as an aging retarder. The polymeric composition was sheeted out of the roller mill in a thickness of 3.5 mm.

The sheet of the polymeric composition was then vulcanized by compression in a hydraulic press at 170 °C for 10 minutes to give a vulcanized sheet-like water-swellable material for water leakage-prevention having a thickness of 3.0 mm. This water leakage-preventing material was subjected to the measurement of the swelling ratio and % swelling retention in the above described manner to give the results shown in the table below.

## Example 2.

A highly water-absorptive resin was prepared by the copolymerization reaction of a monomeric mixture containing a copolymerizable crosslinking agent. Thus, a copolymerization reaction was performed of a monomeric mixture composed of 16.5% by moles of an approximately1:1 mixture of methacrylic acid and sodium methacrylate containing trace amounts of acrylic acid and sodium acrylate, 38.5% by moles of sodium 2-sulfoethyl methacrylate and 45.0% by moles of acrylamide with admixture of 0.2% by weight, based on the total amount of the above mentioned three classes of the monomers, of N,N-methylene bisacrylamide as a crosslinking agent and a small amount of ammonium persulfate as a polymerization initiator. A compound was prepared by uniformly kneading 100 parts of the above prepared highly water-absorptive resin and 100 parts of a polychloroprene rubber together with 4 parts of magnesium oxide, 5 parts of zinc oxide, 1 part of 2-mercapto imidazoline as a vulcanization accelerator, 1 part of stearic acid, 2 parts of di-tert-butyl p-cresol, 20 parts of a process oil as a softener and 2 parts of 2,2-methylene bis-4-methyl-6-tert-butyl phenol on a 10-inch test roller mill for 20 minutes followed by shaping into a sheet of 3.5 mm thickness. The sheet was subjected to vulcanization by heating at 170 °C for 10 minutes under compression in a hydraulic press to give a vulcanized water-swellable material for water-leakage prevention in the form of a sheet having a thickness of 3.0 mm.

The water-leakage prebenting material was tested for the sweling ratio and % swelling retention in the above described manner to give the results shown in the table given below.

## Example 3.

The experimental procedure was substantially the same as in Example 2 except that the crosslinked copolymer as the highly water-absorptive resin was prepared by the copolymerization reaction of a monomeric mixture composed of 24.9% by moles of an approximately 1:1 mixture of methacrylic acid and sodium methacrylate containing trace amounts of acrylic acid and sodium acrylate, 58.1% by moles of sodium 2-sulfoethyl methacrylate and 17.0% by moles of acrylamide with admixture of 0.2% by weight, based on the total amount of the above mentioned three classes of the monomers, of N,N-methylene bisacrylamide as a crosslinking agent and a small amount of ammonium persulfate as a polymerization initiator. The molar ratio of the methacrylic acid/sodium methacrylate mixture to the sodium 2-sulfoethyl methacrylate was 3:7 in each of Examples 2 and 3.

The thus prepared water-leakage preventing material was subjected to the swelling test in the same manner as in Example 1 to give the results shown in the table.

## Comparative Example 1.

The experimental procedure was substantially the same as in Example 2 except that the monomeric mixture, from which the crosslinked copolymer as the highly water-absorptive resin was prepared, containing no acrylamide but was composed of 30% by moles of the same methacrylic acid/sodium methacrylate mixture and 70% by moles of the sodium 2-sulfoethyl methacrylate.

The thus prepared water-leakage preventing material was subjected to the swelling test in the same manner as in Example 1 to give tghe results shown in the table.

Comparative Example 2.

The experimental procedure was substantially the same as in Comparative Example 1 except that the monomeric mixture was composed of 60% by moles of the same methacrylic acid/sodium methacrylate mixture and 40% by moles of the sodium 2-sulfoethyl methacrylate.

The thus prepared water-leakage preventing material was subjected to the swelling test in the same manner as in Example 1 to give the results shown in the table.

Table

| | | Example | | | Comparative Example | |
|---|---|---|---|---|---|---|
| | | 1 | 2 | 3 | 1 | 2 |
| Swelling ratio, times | in city water | 8.2 | 10.1 | 8.5 | 12.1 | 13.9 |
| | in aqueous solution of calcium hydroxide | 3.3 | 4.1 | 3.5 | 3.9 | 3.5 |
| Swelling retention, % | | 40.2 | 40.6 | 41.2 | 25.2 | 25.2 |

As is understood from the results shown in the table, the swelling retention of the water-leakage preventing material cannot be as high as 26% or more when the unsaturated amide compound is omitted in the monomeric mixture from which the highly water-absorptive resin is prepared even by increasing the molar proportion of the sulfoalkyl (meth)acrylate monomer while the value can be easily increased to exceed 40% when an unsaturated amide compound is formulated in the monomeric mixture.

## Claims

1. A water-swellable composition for water-leakage prevention which comprises, in a uniform blend:
(A) 100 parts by weight of an elastomer; and
(B) from 20 to 300 parts by weight of a highly water-absorptive resin which is a crosslinked material of a copolymer of a monomer mixture composed of
(a) from 40 to 90% by moles of a combination of (a-1) at least one unsaturated carboxylic acid selected from the group consisting of acrylic acid and methacrylic acid in the form of the free acid or in the form of a salt and (a-2) at least one unsaturated ester compound selected from the group consisting of esters of acrylic or methacrylic acid having a sulfonic acid group in the form of the free acid or in the form of a salt in a molar ratio (a-1):(a-2) in the range from 2:8 to 4:6, and
(b) from 60 to 10% by moles of at least one unsaturated amide compound selected from the group consisting of acrylamide and methacrylamide.

2. A water-swellable composition for water-leakage prevention as claimed in claim 1 wherein the elastomer as the component (A) is selected from the group consisting of natural rubber, diene-based synthetic rubbers and synthetic resin having pliability.

3. A water-swellable composition for water-leakage prevention as claimed in claim 2 wherein the diene-based synthetic rubber is selected from the group consisting of polyisoprene rubbers, polybutadiene rubbers, random-copolymeric rubbers of styrene and a diene compound, copolymeric rubbers of acrylonitrile and a diene compound, polychloroprene rubbers, copolymeric rubbers of isobutylene and isoprene and ternary copolymeric rubbers of ethylene, propylene and a diene compound.

4. A water-swellable composition for water-leakage prevention as claimed in claim 2 wherein the synthetic resin having pliability is selected from the group consisting of chlorinated polyethylenes, chlorosulfonated polyethylenes, copolymers of ethylene and vinyl acetate, plasticized polyvinyl chloride resins and polyurethanes.

5. A water-swellable composition for water-leakage prevention as claimed in any one of claims 1 to 4 wherein the ester of acrylic or methacrylic acid having a sulfonic acid group in the form of the free acid or a salt is a compound represented by the general formula

$CH_2 = CR\text{-}CO\text{-}O\text{-}(CH_2)_{\overline{n}}\ SO_3X$,

in which R is a hydrogen atom or a methyl group, X is a hydrogen atom or a monovalent cationic group and the subscript n is an integer of at least 2.

6. A water-swellable composition for water-leakage prevention as claimed in any one of claims 1 to 5 wherein the highly water-absorptive resin as the component (B) is a reaction product of the copolymer and a crosslinking agent.

7. A water-swellable composition for water-leakage prevention as claimed in claim 6 wherein the crosslinking agent is a polyfunctional compound having at least two functional groups capable of being reacted with carboxyl groups to form a chemical bond selected from the group consisting of a hydroxy group, epoxy group and amino group.

8. A water-swellable composition for water-leakage prevention as claimed in any one of claims 1 to 5 wherein the highly water absorptive resin as the component (B) is a copolymer of the monomeric constituents (a-1), (a-2) and (b) copolymerized in the presence of a polymerizable compound having at least two ethylenically unsaturated groups in a molecule.

9. A water-swellable composition for water-leakage prevention as claimed in claim 18 wherein the amount of the polymerizable compound having at least two ethylenically unsaturated groups in a molecule is in the range from 0.01 to 5% by weight based on the total amount of the monomeric constituents (a-1), (a-2) and (b).

10. A water-swellable composition for water-leakage prevention as claimed in claim 8 or claim 9 wherein the polymerizable compound having at least two ethylenically unsaturated groups in a molecule is selected from the group consisting of N,N-methylene bis(meth)acrylamide, N,N-ethylene bis(meth)acrylamide, N,N-propylene bis(meth)acrylamide, ethylene glycol di(meth)acrylate, diethylene glycol di(meth)acrylate, triethylene glycol di(meth)acrylate, propylene glycol di(meth)acrylate, polyethylene glycol di(meth)acrylate, trimethylol propane tri(meth)acrylate, pentaerithritol tri(meth)acrylate and pentaerithritol di(meth)acrylate.

11. A water-swellable composition for water-leakage prevention as claimed in claim 7 wherein the polyfunctional compound is selected from the group consisting of ethylene glycol, propylene glycol, glycerin, glycidyl alcohol, diglycidyl ether, glycerin triglycidyl ether, ethylene glycol diglycidyl ether, ethanol amine, ethylene diamine, propylene diamine, polyethylene glycol, trimethylol propane, polyethylene imine and urea.

12. A water-swellable composition for water-leakage prevention as claimed in any one of claims 1 to 11 wherein the highly water-absorptive resin as the component (B) has an equilibrium swelling ratio in water in the range from 10 to 500 times by weight based on the weight before swelling.

13. A water-swellable composition for water-leakage prevention as claimed in any one of claims 1 to 12 wherein the highly water-absorptive resin as the component (B) is compounded with the elastomer as the component (A) in an amount in the range from 50 to 200 parts by weight per 100 parts by weight of the component (A).

8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y,D | CHEMICAL PATENTS INDEX, BASIC ABSTRACTS JOURNAL, Section A, Week 8613, 21th May 1986, A0354, No. 86-084988/13, Derwent Publications Ltd, London, GB; & JP-A-61 031 450 (NIPPON SHOKUBAI KAGAKU) 13-02-1986 * Abstract * | 1-13 | C 08 L 21/00 C 08 L 33/14 // (C 08 L 21/00 C 08 L 33:14 ) (C 08 L 33/14 C 08 L 21:00 ) |
| Y | CHEMICAL PATENTS INDEX, BASIC ABSTRACTS JOURNAL, Section A, Week 8731, 30th September 1987, A0719, no. 87-218185/31, Derwent Publications Ltd, London, GB; & JP-A-62 144 748 (NIPPON SHOKUBAI KAGAKU) 27-06-1987 * Abstract * | 1-13 | |
| D,A | CHEMICAL PATENTS INDEX, BASIC ABSTRACTS JOURNAL, Section A, week 8614, 28th May 1986, A0399, no. 86-090814/14, Derwent Publications Ltd, London, GB; & JP-A-61 036 309 (NIPPON SHOKUBA KAGAKU) 21-02-1986 * Abstract * | | |

TECHNICAL FIELDS SEARCHED (Int. Cl.4)

C 08 L
C 09 K

The present search report has been drawn up for all claims

| Place of search | Date of completion of the search | Examiner |
|---|---|---|
| THE HAGUE | 02-08-1988 | VAN HUMBEECK F.W.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 
& : member of the same patent family, corresponding document

EPO FORM 1503 03.82 (P0401)